Europäisches Patentamt

European Patent Office

Office européen des brevets

(11) Publication number: **0 208 287 B1**

# EUROPEAN PATENT SPECIFICATION

(45) Date of publication of patent specification: **11.11.92**    (51) Int. Cl.⁵: **G06F 1/00, G06F 13/28**

(21) Application number: **86109229.4**

(22) Date of filing: **07.07.86**

(54) **Direct memory access controller.**

(30) Priority: **05.07.85 JP 148634/85**

(43) Date of publication of application:
**14.01.87 Bulletin 87/03**

(45) Publication of the grant of the patent:
**11.11.92 Bulletin 92/46**

(84) Designated Contracting States:
**DE GB IT**

(56) References cited:
**EP-A- 0 103 755**
**US-A- 4 218 876**

**ELECTRONIC DESIGN, vol. 33, no. 7, March 1985, pages 157-169, Hasbrouch Heights, New Jersey, US; E. GOLDBERG et al.: "CMOS microprocessor series shapes its personality with software and hardware"**

**ELECTRONIC DESIGN, vol. 32, no. 19, September 1984, pages 261-272, Waseca, MN, US; R.E. PICKVANCE: "Digital signal processor nimbly jumps over CPU overhead hurdles"**

**ELECTRONIC COMPONENTS & APPLICATIONS, vol. 6, no. 4, 1984, pages 230-238,**

**Eindhoven, NL; G. THOMSEN et al.: "DMA interface for 68000 systems"**

(73) Proprietor: **NEC CORPORATION
7-1, Shiba 5-chome Minato-ku
Tokyo 108-01(JP)**

(72) Inventor: **Takahashi, Yuko
NEC Corporation, 33-1 Shiba 5-chome
Minato-ku Tokyo(JP)**
Inventor: **Kurokawa, Hidefumi
NEC Corporation, 33-1 Shiba 5-chome
Minato-ku Tokyo(JP)**

(74) Representative: **Glawe, Delfs, Moll & Partner
Patentanwälte
Postfach 26 01 62 Liebherrstrasse 20
W-8000 München 26(DE)**

## Description

Background of the Invention

Field of the Invention

The present invention relates to a direct memory access (DMA) controller, and particularly to a DMA controller containing CMOS circuits which are driven by a system clock applied thereto.

Description of the Prior Art

A DMA controller is employed in an information processing system. It serves to control data transfer between memories or between a memory and an input/output (peripheral) unit, which is otherwise controlled by a central processing unit (CPU). In general, the DMA controller is coupled to the CPU via at least one signal bus to which other components of an information processing system such as a memory and a peripheral unit are connected. The system further comprises a clock generator containing an oscillator, e.g., a crystal oscillator, which generates a system clock to be applied to the CPU, the DMA controller and the other units in the system.

The system clock is always applied to a conventional DMA controller so long as the system is activated. The DMA controller, however, controls the DMA transfer only when a DMA request is given by the CPU or the peripheral unit. Therefore, the DMA controller is in an idle state from the time when one DMA transfer is finished to the commencement of subsequent DMA transfer. The system clock continues to be applied to the DMA controller even when it is in the idle state.

The DMA controller contains many CMOS circuits, which are made of complementary insulated-gate field-effect transistors (P-channel MOS FETs and N-channel MOS FETs). CMOS circuits usually contain inverter circuits, in which P- and N-channel MOS FETs are coupled between voltage sources in series. These two transistors are simultaneously turned on during a rise time and a fall time of the system clock applied to the transistors in common. Therefore, a power is consumed in both the rise time and the fall time of the system clock, since a current path is formed between the voltage sources, as is well known. As a result, unrequired power is consumed by the DMA controller in the idle state.

On the other hand, a starting time of the DMA operation and its operation period are not constant but variable. The starting timing of the DMA operation depends upon a program, while the DMA operation period depends upon the program and units to be coupled to the DMA controller such as a peripheral unit, a memory and a CPU. It is, therefore, very difficult to detect the idle state of the DMA controller. Thus, the system clock is continuously applied to the DMA controller in the conventional system whenever the system is activated, so that a large amount of power is consumed.

Even if a monitor for observing a program sequence flow is employed to detect the DMA operation, the monitor requires more complex logic hardware than the DMA controller and is very expensive. The monitor cannot be formed on a semiconductor chip together with the DMA controller. This is a major disadvantage when the DMA controller is formed on a semiconductor chip together with a CPU and/or a memory.

A direct memory access controller according to the preamble of claim 1 is disclosed in EP-A-0 103 755. In this device a system clock is inhibited to be supplied to a microcomputer in response to a hold signal supplied thereto from the outside of the microcomputer. In case the hold signal disappears the system clock is supplied to the microcomputer.

"ELECTRONIC DESIGN", Vol. 33, No. 7, March 1985, pages 157-169, GOLDBERG et al, "CMOS microprocessor series shapes its personality with software and hardware" discloses a microcomputer which enters a stand-by mode by executing a hold instruction and exits that mode in response to a reset.

It is an object of the present invention to provide a DMA controller in which unrequired power consumption is reduced.

Another object of the present invention is to provide a DMA controller formed on a semiconductor chip which performs a DMA operation with a small power consumption without a monitor for detecting the DMA operation.

A DMA controller of the present invention contains a DMA execution section and a system clock control section therein. The system clock control section has a function of inhibiting a system clock application to the DMA execution section during an idle state of the DMA controller and has further a function of allowing the system clock application to the DMA execution section when the DMA operation is required. Thus, according to the present invention, a power consumption in the idle state can be remarkably reduced.

The DMA controller of the present invention has a gate circuit to control the system clock application to the DMA execution section. The gate circuit is formed in the system clock control section and is turned off during the idle state determined by a DMA start timing and a DMA termination timing. These timings are detected by control signals derived from the DMA execution section. The control signals to be used to detect the timings are used to execute the DMA operation. Therefore, the system clock control section can be formed as a simple circuit, so that the DMA control can be formed on a single semiconductor chip together with a CPU without connecting a complex monitor for observing a program sequence flow to the chip.

The DMA execution section may contain a command register receiving a command for the DMA operation, an address register to load a DMA start address, a size register to store a size data indicating the number of data to be transferred according to the DMA operation, a size counter for counting the number of data which has been transferred, a comparator for comparing the size data with a content of the size counter. The comparator generates a coincidence signal when the size data is equal to the content of the size counter. This coincidence signal is sent to a CPU to inform it of termination of the DMA transfer. The command, DMA start address and the size data are sent from the CPU and are written to the command register, the address register and the size register, respectively.

In the present invention, the coincidence signal is used as the control signal to define the DMA termination timing. On the other hand, a command write signal generated to write the command into the command register is used as the control signal to define the DMA start timing. Particularly, the command is written into the command register after the DMA start address and the size data are written into the address register and the size register, respectively, in the present invention. Thus, the system clock is applied to the DMA execution section only when an actual DMA transfer is performed. Therefore, unrequired power consumption can be reduced as much as possible.

Moreover, in the case the DMA execution section has a bus interface circuit which sends a DMA request signal for requesting the DMA operation at an arbitrary timing to a CPU coupled to a DMA transfer bus and receives a DMA grant signal from the CPU, either the DMA request signal or the DMA grant signal or the combination of these signals may be used as the control signal or signals to define the DMA start timing.

As described above, the application of the system clock to the DMA controller is controlled within the DMA controller. Therefore, the CPU is completely released from the DMA data transfer. In addition, a bus connection between the CPU and the DMA controller can be simplified.

Brief Description of the Drawings

Fig. 1 illustrates a system block diagram of a microcomputer system in which a conventional DMA controller is employed.

Fig. 2 illustrates an internal block diagram of a DMA controller according to an embodiment of the present invention.

Fig. 3 illustrates a block diagram showing an important section of the DMA controller illustrated in Fig. 2.

Fig. 4 illustrates an address map assigned to the DMA controller of the present invention.

Fig. 5 illustrates a detailed block diagram of a size register and a size data write circuit of the DMA controller shown in Fig. 2.

Fig. 6 illustrates a circuit diagram of a command write circuit shown in Figs. 2 and 3.

Fig. 7 illustrates a timing chart of a command write operation.

Fig. 8 illustrates an internal block diagram of a microcomputer chip on which both a DMA controller and a CPU are formed according to the present invention.

Fig. 9 illustrates a timing chart of a DMA operation of the present invention.

Detailed Description of the Embodiments

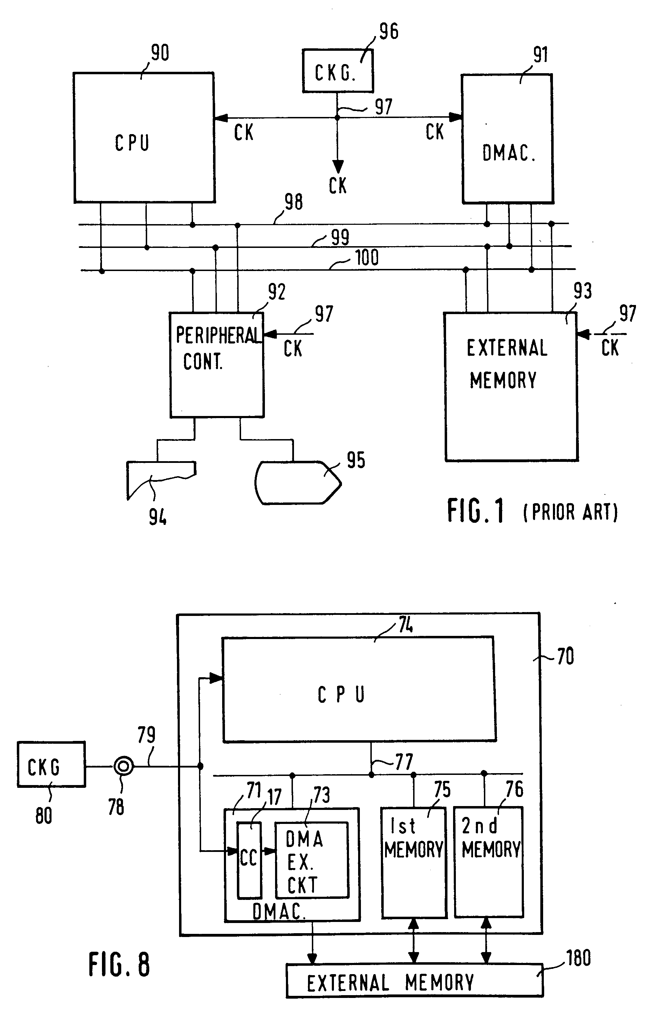

A microcomputer system containing a conventional DMA controller is illustrated in Fig. 1. A CPU 90, a DMA controller 91, a peripheral controller 92 and an external memory 93 are coupled to an external address bus 98, an external data bus 99 and an external control bus 100, in common. The DMA controller 91 is formed on a semiconductor chip different from a chip on which the CPU 90 is formed. The peripheral controller 92 controls a peripheral unit, e.g. a printer unit 94 and a CRT display unit 95. The system further has a system clock generator 96 for generating a system clock (CK) 97 to be applied to the CPU 90, the DMA controller 91 and the peripheral controller 92. When a static memory is used as the external memory 93, the system clock (CK) is not required for that memory 93. Moreover, when a dynamic memory is used as the external memory 93, the system clock 97 is required to a refresh operation. The DMA controller 91 receives an information necessary to execute the DMA operation from the CPU 90 and executes the DMA transfer between the peripheral unit 92 and the external memory 93 according to the received information by using the external buses 98 to 100. The CPU 90 releases the external buses for the DMA transfer and performs a program except for the data transfer.

The DMA controller 91 does not always execute the DMA operation during the system is activated but execute it only when a DMA request is present. Therefore, when the DMA request is absent, the DMA controller is in an idle state. However, the system clock (CK) 97 is continuously applied to the conventional DMA controller 91 from the system clock generator 96 in spite of the idle state. As a result, unrequired power is consumed in the idle state.

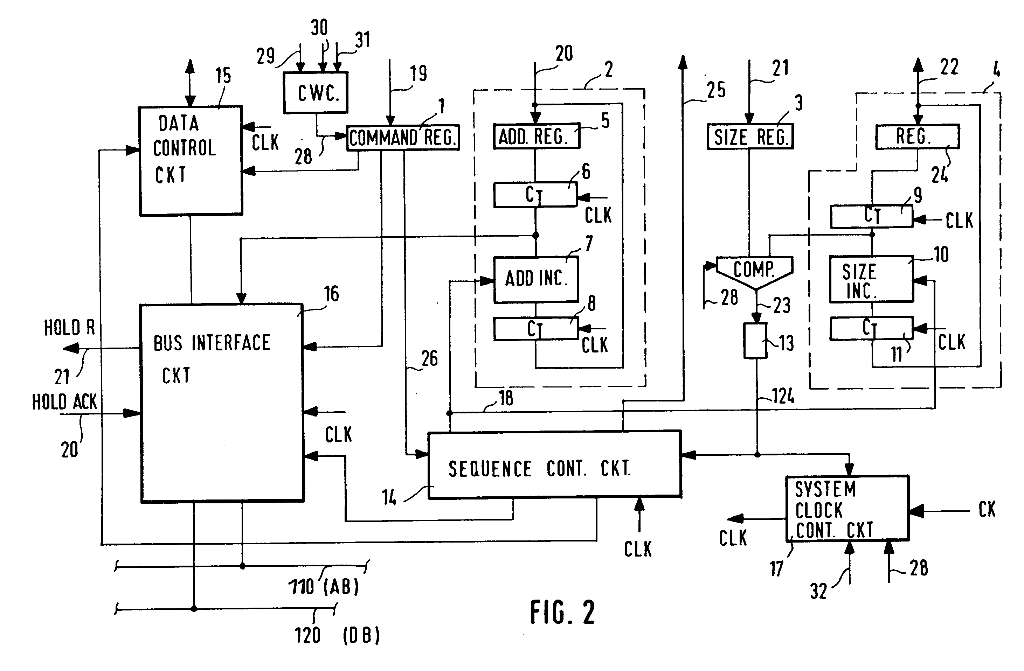

An improved DMA controller according to the present invention is shown in Fig. 2. The DMA controller contains a command register 1, an address counter 2, a size register 3, a size counter 4, a comparator 12, a sequence control circuit 14, a data control circuit 15 and a bus interface circuit 16 and further contains a system clock control circuit 17 which receives the system clock (CK) from an external system clock generator (e.g. CKG shown in Fig. 1).

The command register 1 fetches a command 19 for a DMA transfer from a CPU (not shown). The command 19 is written into the register 1 according to a command write signal 28 generated by a command write circuit 27 responsive to a command register selecting address 29, a data strobe signal 30 and a read/write (R/W) signal 31, each of which is sent from the CPU. Outputs of the command register 1 are operatively applied to the sequence control circuit 14, the data control circuit 15 and the bus interface circuit 16 for commanding the DMA transfer.

The address counter 2 includes an address register 5, an address incrementer 7 and gates 6 and 8. A DMA start address 20 generally sent from the CPU is set the address register 5. The DMA start address 20 is transferred to the incrementer 7 and the bus interface circuit 16 via the gate 6. Thus, the address increment operation is performed in parallel with the DMA data transfer. The increment address is fed back to the address register 5 via the gate 8 and is used a next DMA data transfer. The address incrementer 7 increases in the DMA address sequentially.

A size register 3 loads a size data 21 indicating the number of data to be transferred in DMA mode. The size data is also sent from the CPU and indicates the number of bytes or words. A size counter 4 has a register 24 which is reset to "0" according to a reset signal, a size incrementer 10 and gates 9 and 11. An increment signal 18 applied to the address incrementer 7 is also applied to the size incrementer 10 to increment a content of the register 24. An increment data is fed back into the register 24 via the gate 11. The size counter 4 increases in a content of the register 24 in synchronous with the address counter 2. A content of the register 24 is drived therefrom and is transferred to the CPU via a signal line 22 for monitoring. Further, the content of the register 24 is applied to the comparator 12. The comparator 12 compares the content of the register in the size counter 4 with the size data in the size register 3 and generates a coincidence signal 23 when the size data is equal to the content of the size counter 4. The coincidence signal is used in the present invention as a signal for indicating termination of the DMA transfer and is applied to the sequence control circuit 14 via a delay circuit 13.

The sequence control circuit 14 receives a termination designating signal 124 form the delay circuit 13 and generates a DMA termination signal 25 to be sent to the CPU for indicating the termination of a DMA operation. The sequence control circuit 14 further generates a plurality of control signals described thereinafter to control the data control circuit 15 and the bus interface circuit 16.

The data control circuit 15 contains a plurality of buffer registers and a read/write controller and stores data in the buffer registers temporarily. Data in the buffer registers can be transferred to the external data bus 120 via the bus interface circuit 16 and to the CPU directly. The data control circuit 15 can act as a data arbitration circuit between the external data bus 120 and the CPU.

The bus interface circuit 16 is coupled to the external address bus 110 and the external data bus 120 to which the external memory or a peripheral unit is coupled. The bus interface circuit 16 has an I/O port function in the DMA controller. Further, the bus interface circuit 16 can send a hold request signal (HOLD R) 21 to the CPU coupled to the external address and data buses 110 and 120. The CPU sends a hold acknowledge signal (HOLD ACK) 20 to the bus interface circuit 16 in response to the HOLD R signal 21 when the DMA transfer is allowed and release the external buses 110 and 120 for the DMA transfer. Thus, the DMA controller starts the DMA transfer after the HOLDACK signal 20 is received.

As shown in Fig. 2, the DMA controller of this embodiment contains the sequence control circuit 14, the data control circuit 15, the bus interface circuit 16 and gates 6, 8, 9 and 11, in which the system clock (CK) is necessary to activate complementary type transistors provided therein. The system clock (CK) to be applied to these circuits and gates is controlled by a system clock control circuit 17 provided within the DMA controller and is selectively applied to each circuit or gate via the system clock control circuit 17 as an internal clock (CLK). The system clock control circuit 17 has a gate circuit to switch the system clock (CK) and is responsive to signals generated in the DMA controller.

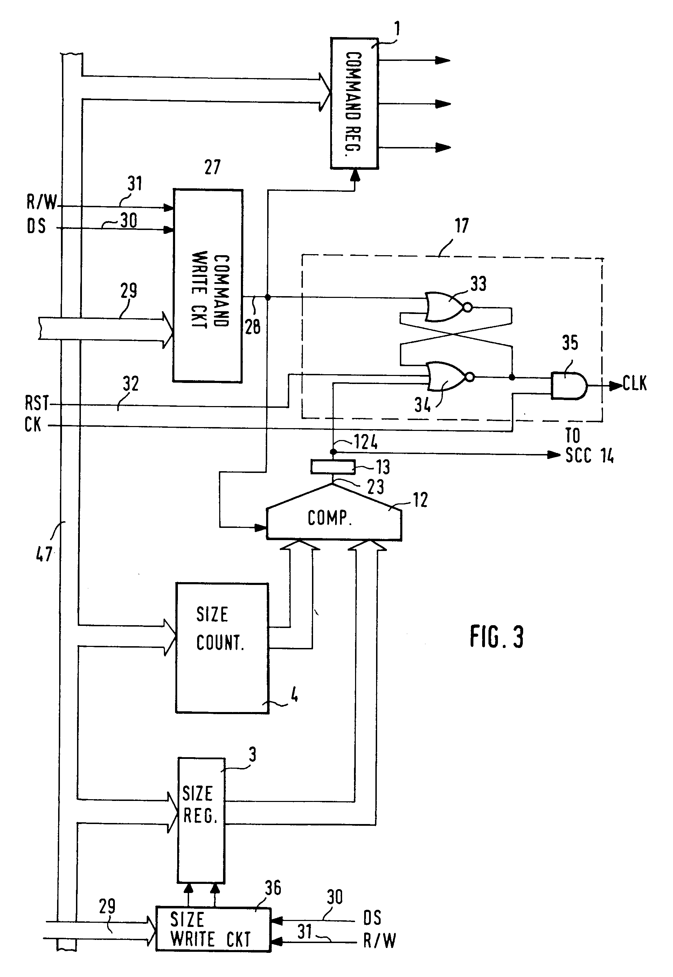

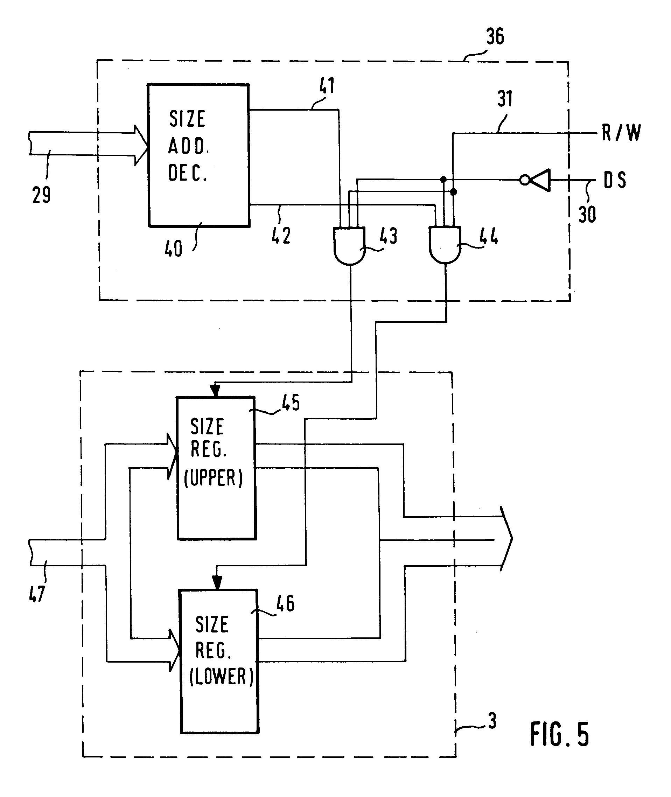

Referring to Fig. 3, a detail operation of the system clock control circuit 17 will be described. The system clock control circuit 17 has a flip-flop circuit consisting of two NOR gates 33 and 34 and an AND gate 35 and receives the command write signal 28 produced by the command write circuit 27 and applied to the command register 1 the system clock (CK), a reset signal 32 and a DMA transfer termination signal 124 outputted from the delay circuit 13. The DMA transfer termination signal 124 is a delayed coincidence signal which is generated from the comparator 12. The flip-flop circuit is reset according to either the DMA transfer termination signal 124 or the reset signal 32. Thus, an ouput of the NOR gate 34 becomes "L" level. As a result, the AND gate 35 is turned off and the system clock (CK) is inhibited. On the other hand, when the command write signal 28 is generated, the flip-flop is set and an output of the NOR gate 34 becomes "H" level. Thus, the AND gate 35 is turned on. As a result, the system clock (CK) is derived from the AND gate 35 as the internal clock (CLK) and is applied to the respective circuit in the DMA controller.

The DMA operation of the present invention will be executed according to the following procedure.

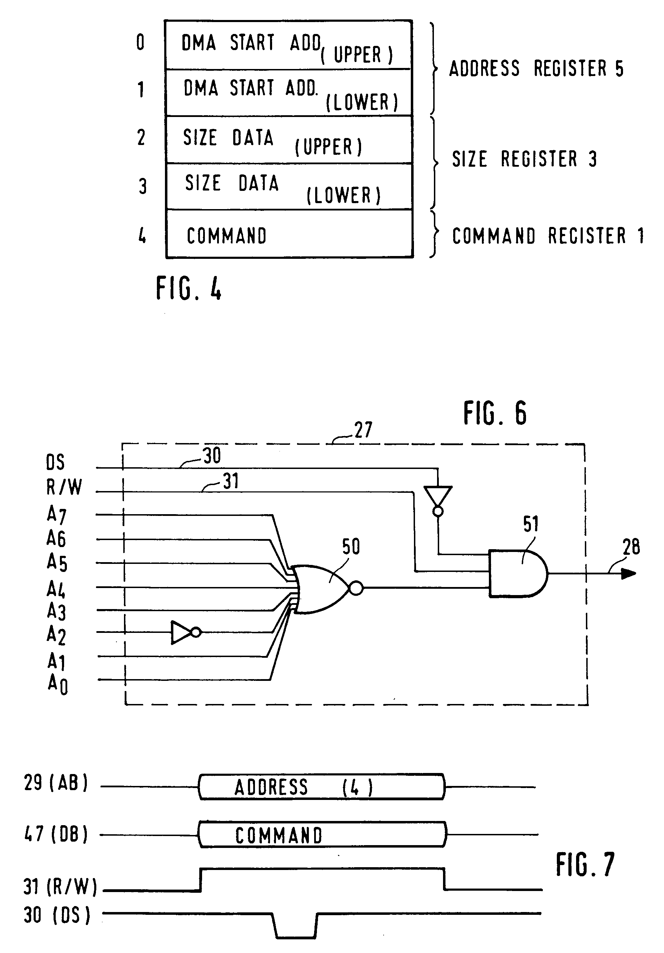

The CPU sends three addresses to write the DMA start address 20, the size date 21 and the DMA command 19 in the respective registers 5, 3 and 1 to the DMA controller. In the embodiment, the registers 5, 3, and 1 are located in addresses 0 to 4 as shown in Fig. 4. It is assumed that a data bus 47 and an address bus 29 coupling the CPU to the DMA controller are a 8-bit buses, respectively and that the DMA start address, the size data and the DMA command consist of 16 bits, 16 bits and 8 bits, respectively. Therefore, the addresses 0 and 1 are assigned to an upper portion and a lower portion of the address register 5. The addresses 2 and 3 are assigned to an upper portion and a lower portion of the size register 3. The address 4 is assigned to the command register 1.

The CPU firstly sends the address 0 to the DMA controller through the address bus 29 and sends an upper 8-bit of the DMA start address to the DMA controller through the data bus 47. Thereafter, the address 1 and an lower 8-bit of the DMA start address are sent to the DMA controller. Thus, the DMA start address is set in the address register 5 in a first cycle of a DMA information preset time.

In a second cycle subsequent to the first cycle, the size data is set in the size register 3. In this cycle, the address 2 and an upper 8-bit of the size data are firstly sent to the DMA controller through the address bus 29 and the data bus 47, respectively. The address 2 is decoded by a size address decoder 40 shown in Fig. 5 and a signal 41 to select an AND gate 43 is generated. The AND gate 43 is turned on in response to the read/write (R/W) signal with "H" level and the data strobe signal (DS) with "L" level. The select signal 41 is applied via the AND gate 43 to an upper size register 45. Thus, the upper 8-bit of the size data is set into the register 45. Thereafter, the address 3 and a lower 8-bit of the size data are sent to the DMA controller. At this time, a select signal 42 is applied to a lower size register 46, and the lower 8-bit size data is set into the register 46.

In a last cycle of the DMA information preset time, the DMA command 19 is set into the command register 1. The command write circuit 27 is shown in Fig. 6. The CPU sends the address 4 (00000/00) and the DMA command 19 to the DMA controller via the address bus 29 and the data bus 47, respectively. An output of an NOR gate 50 becomes "H" level only when the address is 4 (00000/00), and when the DS signal 30 and the R/W signal 31 are "L" and "H", respectively, the command write signal 28 is generated from an AND gate 51. Fig. 7 shows the command write timing chart.

As described above, the command write signal 28 is generated at the last timing in the DMA information preset time. The flip-flop of the system clock control circuit 17 is set in response to the command write signal. Thus, the AND gate 35 is turned on; and therefore the internal clock (CLK) is derived therefrom. According to the internal clock (CLK), the DMA controller starts the DMA transfer.

During the DMA transfer, when the size data is equal to the content of the size counter 4, the coincidence signal 23 is generated from the comparator 12. This signal 23 is delayed through the delay circuit 13 and is applied to the NOR gate 34 to reset the flip-flop circuit as the DMA transfer termination signal 124. Consequently, the AND gate 35 is turned off, and the internal clock application is stopped in the idle state of the DMA controller.

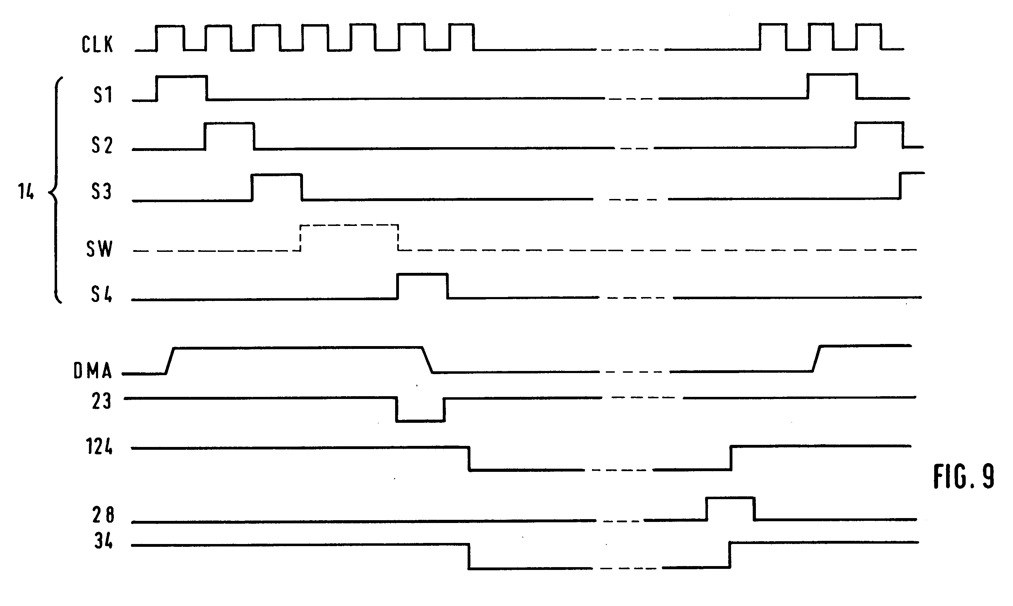

In this embodiment, the command write signal 28 is used to detect the DMA start timing and the coincidence signal 23 is used to detect the DMA termination timing. Therefore, unrequired power consumption can be remarkably reduced. Further, the system clock can be controlled within the DMA controller and can be formed with a very simple circuit shown in Fig. 3. Therefore, the DMA controller shown in Fig. 2 can be formed in the semiconductor chip 70 together with a CPU as shown in Fig. 8.

In Fig. 8, the CPU 74, a first and second memories 75 and 76 and the DMA controller 71 are integrated on a single semiconductor chip 70 and are coupled by an internal bus 77 to each other. The system clock (CK) 79 is generated by the system clock generator 80 and is applied to the chip 70 via clock terminal 78. The system clock 79 is directly transferred to the CPU 74, while the clock 79 is transferred to the DMA execution section 73 via the system clock control circuit 17. The DMA controller 71 executes the DMA transfer between the internal memories 75 and 76 and the external memory 180.

Fig. 9 illustrates the DMA transfer timing. The sequence control circuit 14 generates a control signal S1 and sends it to the bus interface circuit 16 as a DMA address strobe signal. The bus interface circuit 16 transfers the DMA address derived from the gate 6 to the external address bus 110. The sequence control circuit 14 generates a control signal S2 and sends it to the bus interface circuit 16. The control signal S2 is used to set either a read mode or a write mode in the bus interface circuit 16 according to the command of the command register 1. The control signal S2 is further sent to the data control circuit 15 for applying the command thereto. Thereafter, a control signal S3 is generated from the sequence control circuit 14. This control signal S3 is used to execute an actual DMA transfer of a data (one byte or one word). Here, a DMA period required to transfer a data between the internal memories 75 and 76 and the external memory 180 is depended on an access time of the external memory 180. Therefore, a wait control signal SW is generated after the control signal S3, if necessary. The signal SW is inserted between the signals S3 and S4 and an arbitrary period and is produced by the sequence control circuit 14 according to the command of the command register 1. A control signal S4 is generated when the wait signal is terminated from the sequence control circuit 14 and is used to designate the increment operations of the address counter 2 and the size counter 4. At this condition, when the content of the size counter 4 is equal to the size data preliminarly set in the size register 3, the coincidence signal 23 is generated. The coincidence signal is delayed at predetermined period and is sent to the system clock control circuit 17 as the DMA transfer termination signal 124. As a result, the internal clock (CLK) is inhibited. Thus, the DMA operation including the DMA information preset time and the DMA transfer time is terminated. When a new DMA information is preset in the address register 5, the size register 3 and the command register1 in this order, the internal clock (CLK) application is allowed according to the command write signal.

As shown in Fig. 8, the DMA controller and the CPU can be formed on the same chip according to the present invention, and therefore when the DMA controller executes the DMA transfer between the first internal memory 75 and the external memory 180, the CPU 74 can access the second internal memory 76 by using the internal bus 77.

According to the present invention, as described above, the system clock application to the DMA execution section can be inhibited in the idle state of the DMA controller by using a simple clock control circuit 17 and using control signals generated in the DMA controller. Further, DMA start timing is detected according to the command write signal, so that the clock application can be controlled by a program without using a complex hardware monitor unit. However, the DMA start timing may be detected by the HOLD R signal 21 or the HOLD ACK signal 20 in the case that these signals are generated after the command has been set into the command register 1. Moreover, in the case the system clock is produced in the DMA controller, the present invention can also be applied to this DMA controller. Further, a decrementer may be used in replace of the size counter and the comparator. In this case, a borrow signal generated from the decrementer can be used as the DMA transfer termination signal.

## Claims

1. A direct memory access controller comprising an execution circuit (1-16) for executing a direct memory access transfer in response to a clock signal (CLK) and a clock control circuit (17) for supplying said clock signal to said execution circuit, **characterized** in that said execution circuit including first means (27) for detecting that said execution circuit is in an execution-enable state to produce a first signal (28) and second means (12, 13) for detecting that said execution circuit completes the direct memory access transfer to produce a second signal (124), and that said clock control circuit includes third means (33-35) for allowing said clock signal to be supplied to said execution circuit in response to said first signal and for inhibiting said clock signal to be supplied to said execution circuit in response to said second signal.

2. The direct memory access controller as claimed in claim 1 , **characterized** in that said execution circuit further includes a command register (1) storing command information commanding the direct memory access transfer, and that said first means (27) produces said first signal (28) when said command information is stored in said command register.

3. The direct memory access controller as claimed in claim 1 or 2 , **characterized** in that said execution circuit further includes a size register (3) storing size data indicating the number of data to be transferred, and that said second means (12, 13) produces said second signal (124) when the number of data transferred by said execution circuit reaches that indicated by said size data.

4. The direct memory access controller as claimed in claim 3 , **characterized** in that said execution circuit further includes a size counter (4) counting the number of data transferred by said execution circuit, and that said second means includes a comparator (12) for comparing said size data with a count value of said size counter and producing said second signal (124) when said count value becomes equal to said size data.

5. The direct memory access controller as claimed in claim 1, 2, 3 or 4 , **characterized** in that said third means includes a first gate circuit (35) having an input node supplied with said clock signal (CK) and an output node coupled to said execution circuit and a second gate circuit (33, 34) making said first gate open in response to said first signal (28) and close in response to said second signal (124).

**Patentansprüche**

1. Direktspeicherzugriffs-Steuerungsgerät mit einer Ausführungsschaltung (1-16) zur Ausführung einer Direktspeicherzugriffs-Übertragung in Abhängigkeit von einem Taktsignal (CLK) und einer Taktsteuerschaltung (17) zur Zuführung des Taktsignals an die Ausführungsschaltung, dadurch **gekennzeichnet,** daß die Ausführungsschaltung eine erste Einrichtung (27) aufweist zur Erfassung, daß die Ausführungsschaltung in einem Ausführungsfreigabe-Zustand ist, zur Erzeugung eines ersten Signals (28) und eine zweite Einrichtung (12, 13) zur Erfassung, daß die Ausführungsschaltung die Direktspeicherzugriffs-Übertragung beendet, um ein zweites Signal (124) zu erzeugen, und daß die Taktsteuerschaltung eine dritte Einrichtung (33, 35) aufweist, um die Zufuhr des Taktsignals an die Ausführungsschaltung in Abhängigkeit von dem ersten Signal zu ermöglichen und um die Zuführung des Taktsignals an die Ausführungseinheit in Abhängigkeit vom zweiten Signal zu verhindern.

2. Direktspeicherzugriffs-Steuergerät nach Anspruch 1, dadurch **gekennzeichnet,** daß die Ausführungseinheit ferner ein Befehlsregister (1) aufweist, das Befehlsinformationen, die die Direktspeicherzugriffs-Übertragung befehlen, speichert, und daß die erste Einrichtung (27) das erste Signal (28) erzeugt, wenn die Befehlsinformation in dem Befehlsregister gespeichert ist.

3. Direktspeicherzugriffs-Steuerungsgerät nach Anspruch 1 oder 2, dadurch **gekennzeichnet,** daß die Ausführungseinheit ferner ein Größenregister (3) aufweist, das Größendaten speichert, die die Anzahl der zu übertragenden Daten angeben, und daß die zweite Einrichtung (12, 13) das zweite Signal (124) erzeugt, wenn die Anzahl der durch die Ausführungseinheit übertragenen Daten, die durch die Größendaten angegebene Zahl erreicht.

4. Direktspeicherzugriffs-Steuergerät nach Anspruch 3, dadurch **gekennzeichnet,** daß die Ausführungseinheit ferner einen Größenzähler (4) aufweist, der die Zahl der durch die Ausführungseinheit übertragenen Daten zählt, und daß die zweite Einrichtung einen Komparator (12) aufweist zum Vergleichen der Größendaten mit einem Zählwert des Größenzählers und zur Erzeugung des zweiten Signals (124), wenn der Zählwert gleich den Größendaten ist.

5. Direktspeicherzugriffs-Steuerungsgerät nach Anspruch 1, 2, 3 oder 4, dadurch **gekennzeichnet,** daß die dritte Einrichtung eine erste Torschaltung (35) aufweist, die einen mit dem Taktsignal (CK) versorgten Eingangsknoten und einen mit der Ausführungseinheit gekoppelten Ausgangsknoten aufweist, und eine zweite Torschaltung (33, 34), die das erste Tor in Abhängigkeit von dem ersten Signal (28) öffnet und in Abhängigkeit vom zweiten Signal (24) schließt.

**Revendications**

1. Contrôleur pour l'accès direct à une mémoire comprenant un circuit d'exécution (1-16) pour exécuter un transfert d'accès direct à une mémoire en réponse à un signal d'horloge (CLK) et un circuit de commande d'horloge (17) pour fournir ledit signal d'horloge audit circuit d'exécution, caractérisé en ce que ledit circuit d'exécution comprend un premier moyen (27) pour détecter le fait que ledit circuit d'exécution est dans un état de validation d'exécution afin de produire un premier signal (28) et un second moyen (12, 13) pour détecter que ledit circuit d'exécution achève le transfert d'accès direct à une mémoire afin de produire un second signal (124), et que ledit circuit de commande d'horloge comprend un troisième moyen (33-35) pour permettre la fourniture dudit signal d'horloge audit circuit d'exécution en réponse audit premier signal et pour empêcher la fourniture dudit signal d'horloge audit circuit d'exécution en réponse audit second signal.

2. Contrôleur pour l'accès direct à une mémoire selon la revendication 1, caractérisé en ce que ledit circuit d'exécution comprend en outre un registre d'ordre (1) stockant l'information d'ordre ordonnant le transfert d'accès direct à une mémoire, et en ce que ledit premier moyen (27) produit ledit premier signal (28) lorsque ladite information d'ordre est stockée dans ledit registre d'ordre.

3. Contrôleur pour l'accès direct à une mémoire selon la revendication 1 ou 2, caractérisé en ce que ledit circuit d'exécution comprend en outre un registre de valeur (3) stockant une donnée de valeur indiquant le nombre de données devant être transférées, et en ce que ledit second moyen (12, 13) produit ledit second signal (124) lorsque le nombre des données transférées par ledit circuit d'exécution atteint celui indiqué par ladite donnée de valeur.

4. Contrôleur pour l'accès direct à une mémoire selon la revendication 3, caractérisé en ce que ledit circuit d'exécution comprend en outre un compteur de valeur (4) comptant le nombre de données transférées par ledit circuit d'exécution, et en ce que ledit second moyen comporte un comparateur (12) pour comparer ladite donnée de valeur à une valeur de comptage dudit compteur de valeur et produire ledit second signal (124) lorsque ladite valeur de comptage devient égale à ladite donnée de valeur.

5. Contrôleur pour l'accès direct à une mémoire selon la revendication 1, 2, 3 ou 4, caractérisé en ce que ledit troisième moyen comprend un premier circuit à porte (35) ayant un noeud d'entrée alimenté avec ledit signal d'horloge (CK) et un noeud de sortie relié audit circuit d'exécution et un second circuit à porte (33, 34) rendant ladite première porte ouverte en réponse audit premier signal (28) et fermée en réponse audit second signal.

FIG.1 (PRIOR ART)

FIG. 8

FIG. 2

FIG. 3

FIG. 5

| 0 | DMA START ADD (UPPER) |
| 1 | DMA START ADD. (LOWER) |
| 2 | SIZE DATA (UPPER) |
| 3 | SIZE DATA (LOWER) |
| 4 | COMMAND |

ADDRESS REGISTER 5

SIZE REGISTER 3

COMMAND REGISTER 1

FIG. 4

FIG. 6

27

DS
R/W
A7
A6
A5
A4
A3
A2
A1
A0

30
31

50

51

28

29 (AB) — ADDRESS (4)

47 (DB) — COMMAND

31 (R/W)

30 (DS)

FIG. 7

FIG. 9

EP 0 208 287 B1